# EUROPEAN PATENT SPECIFICATION

(11) **EP 2 024 100 B1**
(45) Date of publication and mention of the grant of the patent: **27.07.2011**
(21) Application number: 07777393.5
(22) Date of filing: 04.06.2007
(51) Int. Cl.: B05B 7/04, B05B 7/10

(54) **FULL CONE AIR ASSISTED SPRAY NOZZLE FOR CONTINUOUS METAL CASTING COOLING**
VOLLKEGELDRUCKSPRÜHDÜSE ZUR KÜHLUNG VON METALLSTRANGGÜSSEN
BUSE DE PULVÉRISATION À COMMANDE PNEUMATIQUE À CÔNE PLEIN POUR REFROIDISSEMENT DE PIÈCES MÉTALLIQUES COULÉES EN CONTINU

(30) Priority: 05.06.2006 US 811059 P; 01.06.2007 US 809824
(43) Date of publication of application: 18.02.2009
(73) Proprietor: Spraying Systems Co., Wheaton, IL 60189-7900 (US)
(72) Inventor: PETERSON, Lesli, Glendale Heights, IL 60139 (US); HOFHERR, Christy, Rockford, IL 61107 (US)
(74) Representative: Makovski, Priscilla Mary
(86) International application number: PCT/US2007/013151
(87) International publication number: WO 2007/145893

(56) References cited:
- DE-U1-202004 019 745
- FR-A- 530 726
- US-A- 3 716 190
- US-A- 3 895 759
- US-B1- 6 561 440

## Description

### FIELD OF THE INVENTION

The present invention relates generally to pressurized air assisted spray nozzle assemblies, and more particularly, to an air assisted spray nozzle assembly adapted for spraying cooling liquid in continuous metal casting systems.

### BACKGROUND OF THE INVENTION

Pressurized air assisted spray nozzle assemblies are known for spraying cooling liquids in continuous metal casting systems, such as disclosed in U.S. Patent No. 6,726,127 assigned to the same assignee as the present application. Such spraying systems typically preatomize liquid and direct the liquid particles into a flat spray pattern. A plurality of such spray nozzles are aligned along the path of the movement of the continuous cast slab.

In the continuous casting of billets, which are substantially square in cross section, it can be desirable to direct a round spray pattern for more complete and effective coverage. Heretofore, however, it has been difficult to reliably generate a full cone preatomized liquid spray discharge with a uniform liquid particle distribution. Such spray nozzles commonly require a whirl imparting vane which is relatively small in size, can be difficult and expensive to manufacture, and can be subject to clogging.
US 6 561 440 discloses a spray nozzle including a nozzle body having a liquid flow passageway communicating with a discharge orifice and a vane disposed within the passageway upstream of the discharge orifice. The vane has a central orifice and a plurality of circumferentially spaced angled passages for tangentially directing a plurality of liquid flow streams. The circumferentially spaced passages are outwardly opening rectangular or substantially U shaped slots.
FR530726 discloses a device for forming an artificial mist of water comprising a rose having an internal diaphragm and angled passageways leading downstream to an orifice.

### OBJECTS AND SUMMARY OF THE INVENTION

According to the invention there is provided a full cone liquid spray nozzle in accordance with claim 1.

It is an object of the present invention to provide an air assisted spray nozzle assembly adapted for more reliably directing a full cone liquid spray pattern for use in continuous metal casting cooling systems.

Another object is to provide an air assisted spray nozzle assembly as characterized above which is affective for producing a full cone liquid spray pattern with substantially uniform liquid particle distribution for efficient and complete cooling of the billet castings.

A further object is to provide an air assisted spray nozzle assembly of the above kind which includes a whirl directing vane adapted for enhanced liquid particle distribution and mixing and which includes relatively large size passageways that are less susceptible to clogging.

Another object it to provide such an air assisted spray nozzle assembly that can be manufactured precisely and economically.

Other objects and advantages of the invention will become apparent upon reading the following detailed description and upon reference to the drawings, in which:

### BRIEF DESCRIPTION OF THE DRAWINGS

Figure 1 is a vertical section of an illustrative spray nozzle assembly in accordance with the invention;

FIG. 2 is an enlarged longitudinal section of the spray nozzle of the illustrated spray nozzle assembly;

FIG. 3 is an upstream end view of the spray nozzle shown in FIG. 2;

FIG. 4 is a plan view of a downstream end of a whirl imparting vane of the spray nozzle shown in FIG. 2;

FIGS. 5 and 6 are side views of the illustrative whirl imparting vane, taken in the planes of lines 5-5 and 6-6 in FIG. 4, respectively;

FIG. 7 is a vertical section of the illustrative whirl imparting vane, taken in the plane of line 7-7 in FIG. 4;

FIG. 8 is a plan view of an upstream end of the illustrated whirl imparting vane; and

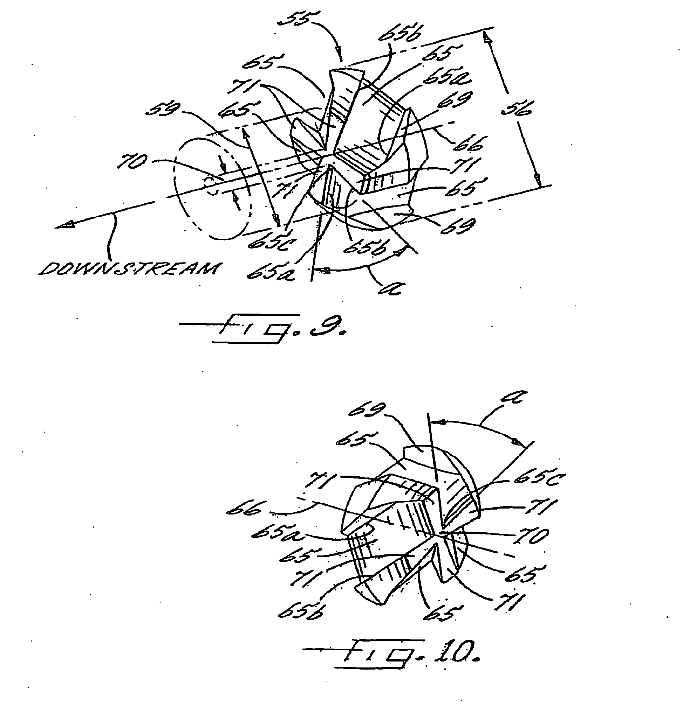

FIGS. 9 and 10 are perspectives of the illustrative whirl imparting vane taken in substantially perpendicular relation to one of the angled V-shaped liquid passages in the vane.

While the invention is susceptible of various modifications and alternative constructions, a certain illustrative embodiment thereof has been shown in the drawings and will be described below in detail. It should be understood, however, that there is no intention to limit the invention to the specific form disclosed, but on the contrary, the intention is to cover all modifications, alternative constructions, and equivalents falling within the scope of the invention.

### DETAILED DESCRIPTION OF PREFERED EMBODIMENT

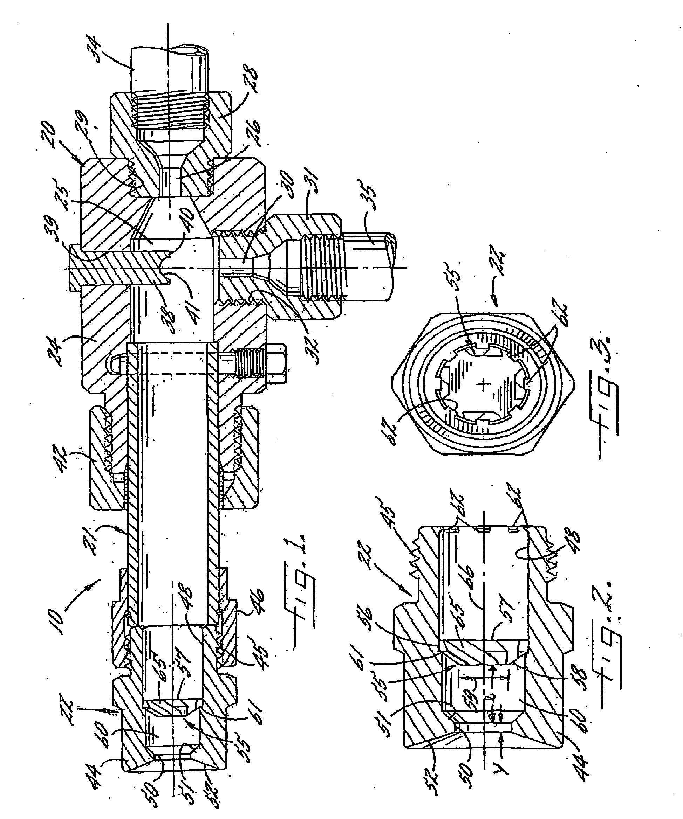

Referring now more particularly to Figure 1 of the drawings, there is shown an illustrated air assisted liquid spray nozzle assembly 10 in accordance with the invention. It will be understood that a plurality of such spray nozzle assemblies may be utilized in a cooling system for a continuous metal casting apparatus, such as shown in the afore-mentioned U.S. Patent 6,726,127.

The illustrated spray nozzle assembly 10 basically comprises a preliminary liquid atomizing head or section 20, an elongated tubular barrel 21 connected at its upstream end to the atomizing head 20, and a spray nozzle 22 connected to the downstream end of the barrel 21. The atomizing head 20 comprises a hollow body 24 having an elongated expansion chamber 25 extending axially thereof, a pressurized air inlet 26 defined by an orifice fitting 28 in threaded engagement in an axial bore 29 in an upstream end of the body 24, and a liquid coolant inlet 30 communicating transversely with the expansion chamber defined by an orifice fitting 31 in threaded engagement with a radial bore 32 extending through a side wall of the body 24. The air inlet orifice fitting 28 is connected to a pressurized air supply line 34, and the liquid inlet orifice fitting 31 is coupled to a liquid coolant, preferably water, supply line 35. The atomizing head 20 further includes an impingement post 38 fixed, such as by a press fit, into a radial bore 39 in diametrically opposed relation to the liquid inlet 30. The impingement post 38 extends into the chamber 25 with an outer end 40 approximately on longitudinal axis of the body 24 formed with a central recess 41. Pressurized air and liquid air streams introduced through the liquid and air inlets 26, 30, respectively, converge in the atomizing head with the assistance of the impingement pin post 38, pre-atomizing the liquid for direction through the barrel 21 and discharge from the spray nozzle 22. The barrel 21 in this case is removably secured to the hollow body 24 by a threaded annular retainer cap 42, consistent with the disclosure of the afore-referenced patent 6,726,127.

The spray nozzle 22 comprises an elongated hollow body 44 having an externally threaded upstream end 45 for connection to the end of the barrel 21 by a threaded annular retaining member 46 supported on downstream end of the barrel 21 for rotational and axial movement. Threaded engagement of the retainer member 46 with the spray nozzle end 45, through rotation of the retainer 46, draws the upstream end of the spray nozzle 22 into fixed engagement with the downstream end of the barrel 21.

The nozzle body 44 has an axial liquid passageway 48 communicating with the barrel 21 and a circular discharge orifice 50 at a downstream end of the nozzle body. The discharge orifice 50 in this case is cylindrically configured with an inwardly converging frustoconical inlet section 51 and a relatively small outwardly flared frustoconical section 52 at the exit end.

For imparting a swirling movement to liquid passing through the nozzle body 44 and for further breaking up the liquid particles for distribution throughout a full cone liquid spray pattern emitted from the discharge orifice 50, a vane 55 is provided in the passageway 48 intermediate the upstream end of the nozzle body and the discharge orifice 50. The vane 55 in this case is a separate member or insert press fit within the liquid passageway 48. As will become apparent below, the vane 55 may be formed from a blank slug having a cylindrical upstream section 56 which defines a relatively large diameter upstream end face 57 and an inwardly tapered, frustoconical section 58 which defines a relatively smaller diameter downstream end face 59. For ensuring predetermined longitudinal positioning of the vane 55 upstream of the discharge orifice 50, such that the passageway 48 defines a substantially cylindrical whirl and mixing chamber 60 between the vane 55 and discharge orifice 50, the passageway 48 is formed with a small counter bore that defines a locating seat 61 against which the vane 55 is positioned. To prevent accidental displacement of the vane 55 from the nozzle body 44 in the event it might become loosened, the nozzle body 44 is formed with inwardly directed radial stakes 62 about the upstream end of the inlet passage 48.

The nozzle vane has a unique passageway construction which facilitates further breakdown of the preatomized liquid and the substantially uniform distribution of liquid particles throughout a discharging full cone spray pattern for enhanced uniform application, such as in cooling of moving metal shapes in continuous metal casting operations. To this end, the whirl imparting vane 55 is formed with a plurality of liquid passageways 65 that proceed at an angle to a longitudinal axis 66 of the vane and are defined by V-shaped cuts. The passageways 65, which have side walls 65a, 65b at an acute angle to each other, extend through both the upstream relatively large diameter end face 57 of the vane and the relatively smaller downstream end face 59. According to one preferred embodiment, a vane with particularly good performance can be produced from a slug having a cylindrical section 56 with a diameter that is 7 times its axial length and a downstream frustoconical section 58 having a downstream end face diameter 59 of 4 times its axial length. Moreover, in that preferred embodiment, the vane can be positioned in the nozzle 22 such that the end face is at a distance ℓ from the discharge orifice 50 that is about 7 times the length y of the orifice and the discharge orifice 50 has a diameter 5.5 times its orifice length y.

An apex 65c of each V-shaped passageway 65 is at an angle β to the longitudinal axis of the vane and extends through the downstream end face 59 short of the axial center 66 of the vane. In the illustrated embodiment, the vane 55 has four V-shaped passageways 65 spaced evenly about the circumference of the vane. Each V-shaped passageway 65 has an apex 65c that forms an angle β of about 55° to the longitudinal axis of the vane. Moreover, the sides 65a, 65b of the V-shaped passageways 65 preferably define an acute angle α of between approximately 40° and approximately 50°, and most preferably an angle of about 46°. In this case, the upstream end face 57 of the vane 55 has a generally rectangular appearance defined by sides 65a, 65b of the V-shaped cuts and four generally circumferential spaced seating segments 54a of the upstream cylindrical section 56 of the vane 55, which can be press fit within the nozzle body for secure retainment. The cuts which define the V-shaped passageways 65 in this instance further define a small ledge 69 in the upstream cylindrical section 56 of the vane opposite the apex 65c of the passageway.

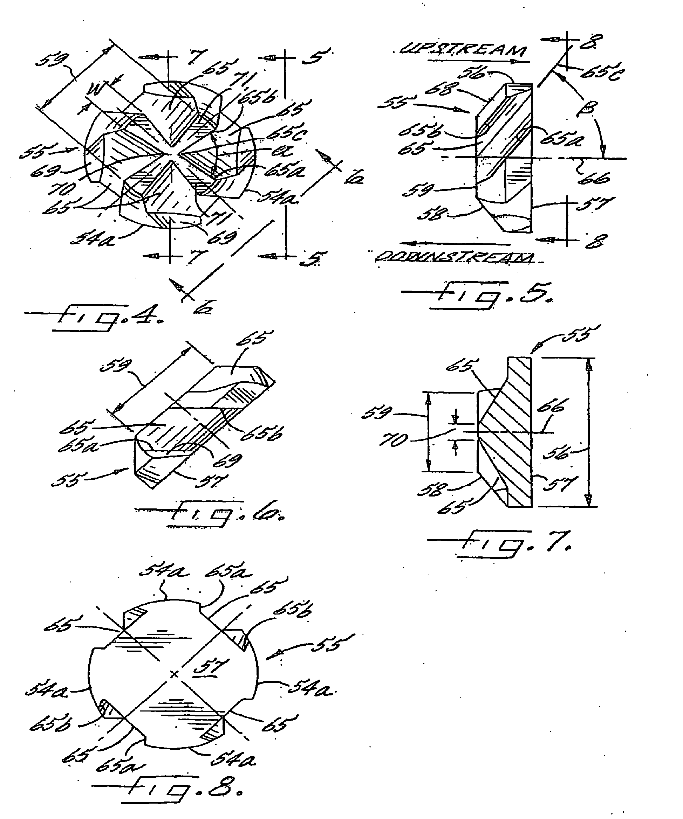

In keeping with the invention, the cuts which define the V-shaped passageways 65 extend nearly to a center of the downstream end face 59 of the vane. More particularly, the apexes 65c of the V-shaped passageways 65 intersect the downstream end face 59 so as to define a relatively small circular end face surface 70 defined by a circle through the apexes 65c of the passageways 65. The apexes 65c preferably extend to within about .015 inches of the vane axis so as to define a circular end face surface 70 having a diameter no greater than about 1/8^{th} the diameter of the downstream end face 59 of the frustoconical end section of the vane 55. The four V-shaped passageways 65 in this case define a relatively small cross-shaped end surface pattern defined by the circular central end surface 70 and four relatively small surface area legs 71 that extend in slightly outwardly extending relation from the central end face surface 70, as viewed from a downstream end of the vane (FIG. 4). The vane 55 accordingly has a general cross leaf appearance. The V-shaped passageways preferably have a depth such that the largest width *w* of the cross pattern is ¼ the diameter 59 of the end face.

In operation of the spray nozzle assemble 10, it will be seen that liquid and pressurized air streams directed into the preatomizing head of 20 will preatomize the liquid with the assistance of the liquid stream impinging upon the recessed end face of the impingement post 38. The preatomized liquid particles are forcefully directed through the barrel 21 to the spray nozzle 22. As the preatomized liquid particles pass through the plurality of angled passageways 65 in the vane 55, the particles are broken down further and directed into the downstream mixing chamber 60 in swirling fashion. This causes the liquid to further break down and intermix for subsequent discharge though the discharge orifice 50 in a full cone liquid spray pattern with substantially uniformly atomized liquid distributed throughout the full cone spray pattern. The illustrated spray nozzle is effective for maintaining a relatively constant spray angle over a large pressure range, such as between 10 psi and 100 psi, with the V-shaped passageways of the vane and the large open tip area preventing clogging.

From the foregoing, it can be seen that an air assisted spray nozzle assembly is provided that is adapted for reliably directing a full cone spray pattern with uniform particle distribution, particularly effective for application in continuous metal casting systems. The spray nozzle assembly includes a whirl directing vane adapted for enhanced liquid particle distribution and mixing with relatively large size passageways that are less susceptible to clogging. The vane further lends itself to precision, yet economical, manufacture.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law.

## Claims

1. A full cone liquid spray nozzle (22) comprising:
a nozzle body (44) having a discharge orifice (50) at a downstream end and an inlet at an upstream end for connection to a liquid supply, a liquid flow passageway (48) extending through the nozzle body communicating between the inlet and the discharge orifice, a vane (55) disposed in the liquid flow passageway (48) upstream of the discharge orifice (50), a whirl and mixing chamber (60) defined by the liquid flow passageway (48) between said vane (55) and the discharge orifice (50), said vane (55) having an upstream face (57) and a downstream face (59), said vane (55) having a plurality of V-shaped passageways (65) formed therein, **characterized by** said V-shaped passageways (65) each extending inwards at an angle with respect to a longitudinal axis (66) of the vane (55) between the upstream face (57) and downstream face (59) of the vane (55).

2. The spray nozzle of claim 1 wherein the vane includes an upstream cylindrical section (56) and a downstream frustoconical section (58).

3. The spray nozzle of claim 2 wherein the V-shaped passageways (65) are arranged and configured so as to define a plurality of seating segments (54a) in the cylindrical section (56) of the vane (55) which engage an inside wall of the fluid passageway (65) in the nozzle body (44) so as to retain the vane (55) in the fluid passageway (65).

4. The spray nozzle of claim 2 wherein the plurality of V-shaped passageways (65) are spaced evenly about the circumference of the vane (55).

5. The spray nozzle of claim 1 wherein an apex (65c) of each of the V-shaped passageways (65) intersects the downstream face (59) of the vane (55) at a position offset from an axial center (66) of the vane (55).

6. The spray nozzle of claim 5 wherein the intersection of the V-shaped passageways (65) with the downstream face (59) of the vane (55) so as to form a generally circular end face surface (70) that is defined by a circle through the apexes (65c) of the V-shaped passageways (65).

7. The spray nozzle of claim 6 wherein the generally circular end face surface (70) has a diameter no greater than 1/8^{th} a diameter of the downstream face (59) of the vane (55).

8. The spray nozzle of claim 6 wherein the V-shaped passageways (65) are arranged and configured so as to define a plurality of surface area legs (71) that extend outward from the circular end face surface (70) when viewed towards the downstream face (59) of the vane (55).

9. The spray nozzle of claim 8 wherein the width of each surface area leg (71) has a largest width that is approximately ¼ the diameter of the downstream face (59) of the vane (55).

10. The spray nozzle of claim 2 wherein the cylindrical section (56) of the vane (55) has a diameter approximately seven times an axial length of the cylindrical section (56).

11. The spray nozzle of claim 2 wherein the frustoconical section (58) has a diameter at the downstream face (59) of the vane (55) that is approximately four times the axial length of the frustoconical section (58).

12. The spray nozzle of claim 1 wherein the vane (55) is positioned in the liquid flow passageway (48) such that the downstream face (59) of the vane (55) is at a distance *l* from the discharge orifice (50) that is approximately seven times a length of the discharge orifice (50).

13. The spray nozzle of claim 12 wherein the discharge orifice (50) has a diameter approximately five and one half times the length y of the discharge orifice (50).

14. The spray nozzle of claim 1 wherein each V-shaped passageway (65) includes a pair of sidewalls (65a,65b) at an acute angle to each other.

15. The spray nozzle of claim 14 wherein the sidewalls (65a,65b) of each V-shaped passageway (65) of the vane (55) define an angle of between approximately 40° and 50°.

16. The spray nozzle of claim 1 wherein each V-shaped passageway (65) has an apex (65c) that defines an angle β of approximately 55° with the longitudinal axis of the vane.

## Patentansprüche

1. Vollkegel-Flüssigkeitssprühdüse (22) umfassend:
einen Düsenkörper (44) mit einer Ausstoßöffnung (50) an einem stromabwärtigen Ende und einem Einlass an einem stromaufwärtigen Ende zur Verbindung mit einer Flüssigkeitszufuhr, einen Flüssigkeitsströmungsdurchgang (48), der sich durch den Düsenkörper erstreckt und die Verbindung zwischen dem Einlass und der Ausstoßöffnung bildet, ein Leitschaufelelement (55), das stromaufwärts von der Ausstoßöffnung (50) in dem Flüssigkeitsströmungsdurchgang (48) angeordnet ist, eine Wirbel- und Mischkammer (60), die von dem Flüssigkeitsströmungsdurchgang (48) zwischen dem Leitschaufelelement (55) und der Ausstoßöffnung (50) definiert wird, wobei das Leitschaufelelement (55) eine stromaufwärtige Fläche (57) und eine stromabwärtige Fläche (59) aufweist und
wobei das Leitschaufelelement (55) eine Mehrzahl von darin ausgebildeten V-förmigen Durchgängen (65) aufweist, **dadurch gekennzeichnet, dass** sich die V-förmigen Durchgänge (65) jeweils unter einem Winkel in Bezug auf eine Längsachse (66) des Leitschaufelelements (55) zwischen der stromaufwärtigen Fläche (57) und der stromabwärtigen Fläche (59) des Leitschaufelelements (55) einwärts erstrecken.

2. Sprühdüse nach Anspruch 1, wobei das Leitschaufelelement einen stromaufwärtigen zylindrischen Abschnitt (56) und einen stromabwärtigen kegelstumpfförmigen Abschnitt (58) umfasst.

3. Sprühdüse nach Anspruch 2, wobei die V-förmigen Durchgänge (65) so angeordnet und konfiguriert sind, dass sie in dem zylindrischen Abschnitt (56) des Leitschaufelelements (55) eine Mehrzahl von Sitzflächenelementen (54a) definieren, die mit einer Innenwand des Fluiddurchgangs (65) in dem Düsenkörper (44) in Eingriff stehen, um das Leitschaufelelement (55) in dem Fluiddurchgang festzuhalten (65).

4. Sprühdüse nach Anspruch 2, wobei die Mehrzahl von V-förmigen Durchgängen (65) in einem gleichmäßigen Abstand um den Umfang des Leitschaufelelements (55) angeordnet ist.

5. Sprühdüse nach Anspruch 1, wobei ein Scheitel (65c) jedes der V-förmigen Durchgänge (65) die stromabwärtige Fläche (59) des Leitschaufelelements (55) an einer Position schneidet, die von einem axialen Mittelpunkt (66) des Leitschaufelelements (55) versetzt ist.

6. Sprühdüse nach Anspruch 5, wobei der Schnittbereich der V-förmigen Durchgänge (65) mit der stromabwärtigen Fläche (59) des Leitschaufelelements (55) eine allgemein kreisförmige Stirnflächenoberfläche (70) bildet, die von einem Kreis durch die Scheitel (65c) der V-förmigen Durchgänge (65) definiert wird.

7. Sprühdüse nach Anspruch 6, wobei die allgemein kreisförmige Stirnflächenoberfläche (70) einen Durchmesser aufweist, der nicht größer ist als 1/8 des Durchmessers der stromabwärtigen Fläche (59) des Leitschaufelelements (55).

8. Sprühdüse nach Anspruch 6, wobei die V-förmigen Durchgänge (65) so angeordnet und konfiguriert sind, dass sie eine Mehrzahl von Oberflächenarmen (71) definieren, die sich bei Draufsicht auf die stromabwärtige Fläche (59) des Leitschaufelelements (55) von der kreisförmigen Stirnflächenoberfläche (70) nach außen erstrecken.

9. Sprühdüse nach Anspruch 8, wobei die Breite jedes Oberflächenarmes (71) eine größte Breite hat, die etwa 1/4 des Durchmessers der stromabwärtigen Fläche (59) des Leitschaufelelements (55) entspricht.

10. Sprühdüse nach Anspruch 2, wobei der zylindrische Abschnitt (56) des Leitschaufelelements (55) einen Durchmesser aufweist, der etwa dem Siebenfachen einer axialen Länge des zylindrischen Abschnitts (56) entspricht.

11. Sprühdüse nach Anspruch 2, wobei der kegelstumpfförmige Abschnitt (58) an der stromabwärtigen Fläche (59) des Leitschaufelelements (55) einen Durchmesser aufweist, der etwa dem Vierfachen der axialen Länge des kegelstumpfförmigen Abschnitts (58) entspricht.

12. Sprühdüse nach Anspruch 1, wobei das Leitschaufelelement (55) in dem Flüssigkeitsströmungsdurchgang (48) so positioniert ist, dass sich die stromabwärtige Fläche (59) des Leitschaufelelements (55) in einem Abstand *l* von der Ausstoßöffnung (50) befindet, der etwa dem Siebenfachen einer Länge der Ausstoßöffnung (50) entspricht.

13. Sprühdüse nach Anspruch 12, wobei die Ausstoßöffnung (50) einen Durchmesser aufweist, der etwa dem Fünfeinhalbfachen der Länge *y* der Ausstoßöffnung (50) entspricht.

14. Sprühdüse nach Anspruch 1, wobei jeder V-förmige Durchgang (65) ein Paar von Seitenwänden (65a, 65b) in einem spitzen Winkel zueinander umfasst.

15. Sprühdüse nach Anspruch 14, wobei die Seitenwände (65a, 65b) jedes V-förmigen Durchgangs (65) des Leitschaufelelements (55) einen Winkel zwischen etwa 40° und 50° definieren.

16. Sprühdüse nach Anspruch 1, wobei jeder V-förmige Durchgang (65) einen Scheitel (65c) aufweist, der mit der Längsachse des Leitschaufelelements einen Winkel β von etwa 55° definiert.

## Revendications

1. Une buse de pulvérisation de liquide à cône plein (22) comprenant :
un corps de buse (44) possédant un orifice de décharge (50) à une extrémité aval et une admission à une extrémité amont destinée à être raccordée à une alimentation de liquide, un passage d'écoulement de liquide (48) s'étendant au travers du corps de buse communicant entre l'admission et l'orifice de décharge, une aube (55) disposée dans le passage d'écoulement de liquide (48) en amont de l'orifice de décharge (50), une chambre de tourbillonnement et de mélange (60) définie par le passage d'écoulement de liquide (48) entre ladite aube (55) et l'orifice de décharge (50), ladite aube (55) possédant une face amont (57) et une face aval (59), ladite aube (55) possédant une pluralité de passages en forme de V (65) formés dans celle-ci, **caractérisé en ce que** lesdits passages en forme de V (65) s'étendent chacun vers l'intérieur à un angle par rapport à un axe longitudinal (66) de l'aube (55) entre la face amont (57) et la face aval (59) de l'aube (55).

2. La buse de pulvérisation selon la Revendication 1 où l'aube comprend une partie cylindrique amont (56) et une partie tronconique aval (58).

3. La buse de pulvérisation selon la Revendication 2 où les passages en forme de V (65) sont agencés et configurés de façon à définir une pluralité de segments d'appui (54a) dans la partie cylindrique (56) de l'aube (55) qui s'insèrent dans une paroi intérieure du passage de fluide (65) du corps de buse (44) de façon à retenir l'aube (55) dans le passage de fluide (65).

4. La buse de pulvérisation selon la Revendication 2 où la pluralité de passages en forme de V (65) sont uniformément espacés autour de la circonférence de l'aube (55).

5. La buse de pulvérisation selon la Revendication 1 où un sommet (65c) de chacun des passages en forme de V (65) coupe la face aval (59) de l'aube (55) à une position décalée par rapport à un centre axial (66) de l'aube (55).

6. La buse de pulvérisation selon la Revendication 5 où l'intersection des passages en forme de V (65) avec la face aval (59) de l'aube (55) forme une surface de face d'extrémité généralement circulaire (70) qui est définie par un cercle passant par les sommets (65c) des passages en forme de V (65).

7. La buse de pulvérisation selon la Revendication 6 où la surface de face d'extrémité généralement circulaire (70) possède un diamètre ne dépassant pas 1/8ème d'un diamètre de la face aval (59) de l'aube (55).

8. La buse de pulvérisation selon la Revendication 6 où les passages en forme de V (65) sont agencés et configurés de façon à définir une pluralité de pattes de surface (71) qui s'étendent vers l'extérieur à partir de la surface de face d'extrémité circulaire (70) lorsqu'elles sont observées vers la face aval (59) de l'aube (55).

9. La buse de pulvérisation selon la Revendication 8 où la largeur de chaque patte de surface (71) possède une largeur la plus grande qui est approximativement ¼ du diamètre de la face aval (59) de l'aube (55).

10. La buse de pulvérisation selon la Revendication 2 où la partie cylindrique (56) de l'aube (55) possède un diamètre approximativement sept fois une longueur axiale de la partie cylindrique (56).

11. La buse de pulvérisation selon la Revendication 2 où la partie tronconique (58) possède un diamètre sur la face aval (59) de l'aube (55) qui est approximativement quatre fois la longueur axiale de la partie tronconique (58).

12. La buse de pulvérisation selon la Revendication 1 où l'aube (55) est positionnée dans le passage d'écoulement de liquide (48) de sorte que la face aval (59) de l'aube (55) se trouve à une distance *l* de l'orifice de décharge (50) qui est approximativement sept fois une longueur de l'orifice de décharge (50).

13. La buse de pulvérisation selon la Revendication 12 où l'orifice de décharge (50) possède un diamètre approximativement cinq fois et demie la longueur *y* de l'orifice de décharge (50).

14. La buse de pulvérisation selon la Revendication 1 où chaque passage en forme de V (65) comprend une paire de parois latérales (65a, 65b) à un angle aigu l'une de l'autre.

15. La buse de pulvérisation selon la Revendication 14 où les parois latérales (65a, 65b) de chaque passage en forme de V (65) de l'aube (55) définissent un angle situé entre approximativement 40° et 50°.

16. La buse de pulvérisation selon la Revendication 1 où chaque passage en forme de V (65) possède un sommet (65c) qui définit un angle β 'approximativement 55° avec l'axe longitudinal de l'aube.
